# EUROPÄISCHE PATENTSCHRIFT

(11) **EP 2 590 531 B1**
(45) Veröffentlichungstag und Bekanntmachung des Hinweises auf die Patenterteilung: **03.12.2014**
(21) Anmeldenummer: 11728183.2
(22) Anmeldetag: 15.06.2011
(51) Int. Cl.: A45C 5/14, B60B 33/00, B60B 33/04

(54) **LENKROLLE FÜR KOFFER, GEPÄCKSTÜCKE, TRANSPORTBEHÄLTER OD.DGL.**
SWIVEL CASTER FOR SUITCASES, ITEMS OF LUGGAGE, TRANSPORT CONTAINERS OR THE LIKE
ROULETTE-GUIDE POUR VALISES, PIÈCES DE BAGAGES, CONTENEURS DE TRANSPORT OU ANALOGUES

(30) Priorität: 09.07.2010 DE 202010010103 U
(43) Veröffentlichungstag der Anmeldung: 15.05.2013
(73) Patentinhaber: Sudhaus GmbH & Co KG, 58644 Iserlohn (DE)
(72) Erfinder: WAITZ, Karl-Heinz, 58636 Iserlohn (DE)
(74) Vertreter: Lelgemann, Karl-Heinz
(86) Internationale Anmeldenummer: PCT/EP2011/002958
(87) Internationale Veröffentlichungsnummer: WO 2012/003923

(56) Entgegenhaltungen:
- EP-A1- 0 075 910
- EP-A1- 1 552 763
- DE-U- 1 898 067
- US-A- 4 084 288
- US-A- 5 109 569

## Beschreibung

Die Erfindung bezieht sich auf eine Lenkrolle für Koffer nach dem Oberbegriff des Patentanspruchs 1.

Koffer werden vergleichsweise häufig mit derartigen Lenkrollen versehen, um eine einfache und komfortable Bewegbarkeit des Koffers, insbesondere bei voller Beladung desselben, zu ermöglichen.

Aus der EP 0 874 564 A ist ein Koffer mit Lenkrollen bekannt, bei denen die Lenkachse, um die sich ein Radträger mit einem Laufrad dreht, fest in einem Lenkachsenträger verankert ist, der seinerseits mittels geeigneter Befestigungselemente an der Kofferschale fest angebracht ist.

Sowohl der Lenkachsenträger als auch die darin fest verankerte Lenkachse sind aus einem harten und steifen Werkstoff ausgebildet, so dass die Laufräder insbesondere bei Belastungen quer zur Lenkachse der Laufrolle nicht an dem die Laufrolle haltenden bzw. aufnehmenden kofferseitigen Gehäuseteil schleifen. Bei derartigen Lenkrollen werden aufgrund der starren Verbindung zwischen der Lenkachse einerseits und dem Lenkachsenträger andererseits und bedingt durch die harten und steifen Werkstoffe, aus denen die genannten Bauteile aus gebildet sind, Vibrationen und Laufgeräusche der Laufräder leicht auf den Koffer übertragen und dort verstärkt.

Aus der gattungsbildenden EP 0 075 910 A1 ist eine Lenkrolle mit einem Laufrad bekannt, das um eine Drehachse drehbar gelagert ist. Zu der Lenkrolle gehört eine Lenkachse in Form eines Montagezapfens, der etwa senkrecht zur Drehachse des zumindest einen Laufrads angeordnet ist und um den herum das zumindest eine Laufrad lenkbar ist. Die Lenkrolle hat ein elastisches Dämpfungselement in Form eines elastomeren Körpers. Dieser elastomere Körper ist zwischen dem Laufrad der Lenkrolle einerseits und einem Befestigungsteil bzw. Fahrzeugrahmen andererseits angeordnet, und zwar an einem dem Fahrzeugrahmen zugewandten Endabschnitt des Montagezapfens bzw. auf einer diesen umgebenden Hülse.

Eine ähnliche Lenkrolle ist auch aus der US 5,109,569 A bekannt.

Ausgehend von dem vorstehend geschilderten Stand der Technik liegt der Erfindung die Aufgabe zugrunde, eine Lenkrolle zur Verfügung zu stellen, bei der eine bessere Haftung des elastischen Dämpfungselements am Endabschnitt der Lenkachse erzielt wird.

Diese Aufgabe wird erfindungsgemäß dadurch gelöst, dass zwischen dem elastischen Dämpfungselement und dem Endabschnitt der Lenkachse ein buchsenförmiges Haftungselement angeordnet ist, welches einerseits fest am elastischen Dämpfungselement anhaftet und andererseits fest am Endabschnitt der Lenkachse verankert ist. Das zwischen dem elastischen Dämpfungselement und dem Endabschnitt der Lenkachse vorgesehene Haftungselement kann einerseits optimal zur Anhaftung am Dämpfungselement und andererseits optimal zur sicheren und festen Verankerung am Endabschnitt der Lenkachse ausgebildet sein.

Bei einer vorteilhaften Ausführungsform der erfindungsgemäßen Lenkrolle sind die Drehachse des Laufrads und die Lenkachse der Laufrolle um einen vorgebbaren Abstand versetzt zueinander angeordnet.

Das elastische Dämpfungselement lässt sich zweckmäßigerweise und mit einem geringen technisch-konstruktiven Aufwand als gummielastisches Dämpfungselement ausbilden.

Darüber hinaus ist es möglich, dass ein weiteres, zusätzliches elastisches Dämpfungselement am laufradseitigen Endabschnitt der Lenkachse zwischen dieser und einem das Laufrad drehbar um dessen Drehachse lagernden Radträger angeordnet ist. Die Dämpfungswirkung kann so zwischen dem Radträger und der Lenkachse gedämpft werden, wobei mit zwei elastischen Dämpfungselementen die Dämpfung auf diese beiden elastischen Dämpfungselemente, von denen eines radträgerseitig und das andere lenkachsenträgerseitig angeordnet ist, aufgenommen werden kann.

Vorteilhaft umgibt das elastische Dämpfungselement den kofferseitigen bzw. den laufradseitigen Endabschnitt der Lenkachse zumindest teilweise, vorzugsweise vollständig bzw. nahezu vollständig. Hierdurch kann mit großer Sicherheit vermieden werden, dass es zu Anlageberührungen zwischen der Lenkachse und dem Lenkachsenträger bzw. dem Radträger kommen kann.

Die Lenkachse kann drehfest am Lenkachsenträger bzw. drehfest am Radträger verankert sein.

Um Beschädigungen des Laufrads bzw. des Lenkachsenträgers oder der Kofferschale zu vermeiden, ist es vorteilhaft, wenn am Lenkachsenträger ein zum Laufrad bzw. zum Radträger vorstehendes Begrenzungselement ausgebildet ist, mittels dem eine Bewegung des Laufrads bzw. des Radträgers in Richtung zum Lenkachsenträger so begrenzbar ist, dass eine Berührung zwischen dem Laufrad und dem Lenkachsenträger ausgeschlossen ist.

Um irgendwelche Beschädigungen für die Funktion wichtiger Bestandteile des Radträgers sicher auszuschließen, ist es vorteilhaft, wenn dem lenkachsenträgerseitigen Begrenzungselement eine radträgerseitige Anschlagnase zugeordnet ist, gegen die das Begrenzungselement anschlägt.

Das buchsenförmige Haftungselement ist vorteilhaft aus einem Kunststoff ausgebildet, der im Vergleich zum Werkstoff bzw. zum Kunststoff des Dämpfungselements vergleichsweise hart ist.

Die sichere Verankerung zwischen der Lenkachse einerseits und dem buchsenförmigen Haftungselement andererseits kann qualitativ dadurch erhöht werden, dass im jeweiligen Endabschnitt der Lenkachse Hinterschnitte bzw. Ringausnehmungen ausgebildet sind, in die zugeordnete Formelemente bzw. Ringvorsprünge des Haftungselements vorstehen bzw. hineinragen.

Im Folgenden wird die Erfindung anhand von Ausführungsformen unter Bezugnahme auf die Zeichnung näher erläutert.

Es zeigen:
- Figur 1: eine Schnittdarstellung einer Lenkrolle; und
- Figur 2: eine Schnittdarstellung einer Ausführungsform der erfindungsgemäßen Lenkrolle.

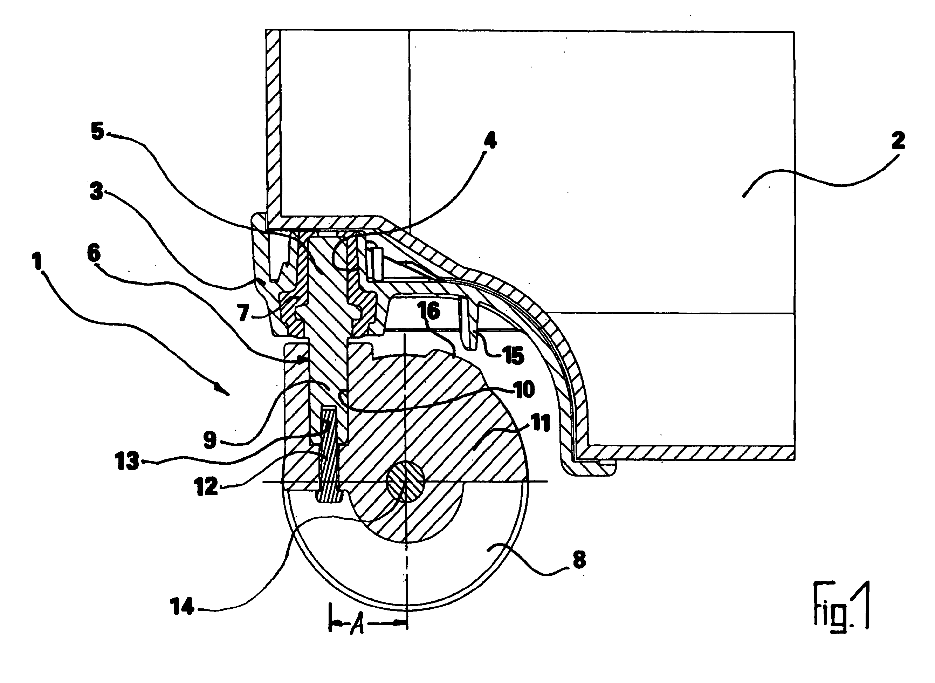

Eine in Figur 1 gezeigte - aus dem Stand der Technik bekannte - Lenkrolle 1 dient dazu, Koffer im Zusammenwirken mit zumindest einer weiteren Lenkrolle und ggf. nicht lenkbaren Laufrollen gesteuert zu verfahren bzw. zu manövrieren. Hierzu sind üblicherweise zumindest zwei derartiger Lenkrollen 1 an zwei einander zugeordneten Ecken eines in den Figuren lediglich mit einem Teil der Kofferschale 2 gezeigten Koffers vorgesehen.

Wie Figur 1 erkennen lässt, weist die Kofferschale 2 an einer Ecke eine Ausnehmung auf, in der die Lenkrolle 1 aufgenommen ist. Im dargestellten Ausführungsbeispiel der Lenkrolle 1 gehört zu dieser ein Lenkachsenträger 3, mittels dem die Lenkrolle 1 an der Ecke der Kofferschale 2 befestigt ist.

Der Lenkachsenträger 3 bildet eine Aufnahme 4 aus, in der ein kofferseitiger Endabschnitt 5 einer Lenkachse 6 der Lenkrolle 1 drehfest verankert ist.

Zwischen der lenkachsenträgerseitigen Aufnahme 4 einerseits und dem kofferseitigen Endabschnitt 5 der Lenkachse 6 andererseits ist ein gummielastisches Dämpfungselement 7 angeordnet, welches im dargestellten Ausführungsbeispiel den kofferseitigen Endabschnitt 5 der Lenkachse 6 nahezu vollständig umgibt, so dass eine unmittelbare Berührung zwischen dem kofferseitigen Endabschnitt 5 der Lenkachse 6 und der Aufnahme 4 des Lenkachsenträgers 3 nicht auftreten kann.

Die Lenkachse 6 ragt aus der Aufnahme 4 des Lenkachsenträgers 3 in Richtung auf ein Laufrad 8 der Lenkrolle 1 vor. An ihrem laufradseitigen Endabschnitt 9 ist die Lenkachse 6 in einer Aufnahme 10 eines Radträgers 11 axial fixiert und drehbar gehaltert. Die Befestigung des laufradseitigen Endabschnitts 9 der Lenkachse 6 in der Aufnahme 10 des Radträgers 11 ist im dargestellten Ausführungsbeispiel mittels eines Haltezapfens 12 realisiert, der von unten in die Aufnahme 10 des Radträgers 11 vorsteht und dort in einer Ausnehmung 13 in der laufradseitigen Stirnseite der Lenkachse 6 fixiert ist. Die Lenkachse 6 bzw. deren laufradseitiger Endabschnitt 9 und der Haltezapfen 12 sind in Bezug auf den Radträger 11 drehbar bzw. der Radträger 11 ist um die Lenkachse drehbar.

Im bzw. am Radträger 11 ist eine Drehachse 14 vorgesehen, um die herum das Laufrad 8 drehbar ist. Die Drehachse 14 ist um einen Abstand A versetzt zur zur Drehachse 14 senkrechten Lenkachse 6 der Lenkrolle 1 angeordnet.

Auf seiner dem Radträger 11 bzw. dem Laufrad 8 zugewandten Unterfläche hat der Lenkachsenträger 3 ein Begrenzungselement 15, dem eine Anschlagnase 16 auf der dem Lenkachsenträger 3 zugewandten Oberfläche des Radträgers 11 zugeordnet ist, so dass auch bei schwer beladenem Koffer und bei vergleichsweise großen von außen auf das Laufrad 8 einwirkenden Stoß- und Schlagbeanspruchungen das Laufrad 8 nicht in Anlage an die Kofferschale 2 bzw. den Lenkachsenträger 3 geraten kann.

Irgendwelche aufgrund des Betriebs der Lenkrolle 1 auftretenden Vibrationen, Laufgeräusche, Stoß- oder Schlagbeanspruchungen werden aufgrund des zwischen dem kofferseitigen Endabschnitt 5 der Lenkachse 6 einerseits und der Aufnahme 4 des Lenkachsenträgers 3 vorgesehenen gummielastischen Dämpfungselements 7 nicht oder nur in einem vergleichsweise geringen Ausmaß auf die Kofferschale 2 übertragen.

Das gummielastische Dämpfungselement kann auch zwischen dem laufradseitigen Endabschnitt 9 der Lenkachse 6 und der Aufnahme 10 des Radträgers 11 vorgesehen sein. In dem Falle ist die Lenkachse 6 dann drehfest am Radträger 11 fixiert.

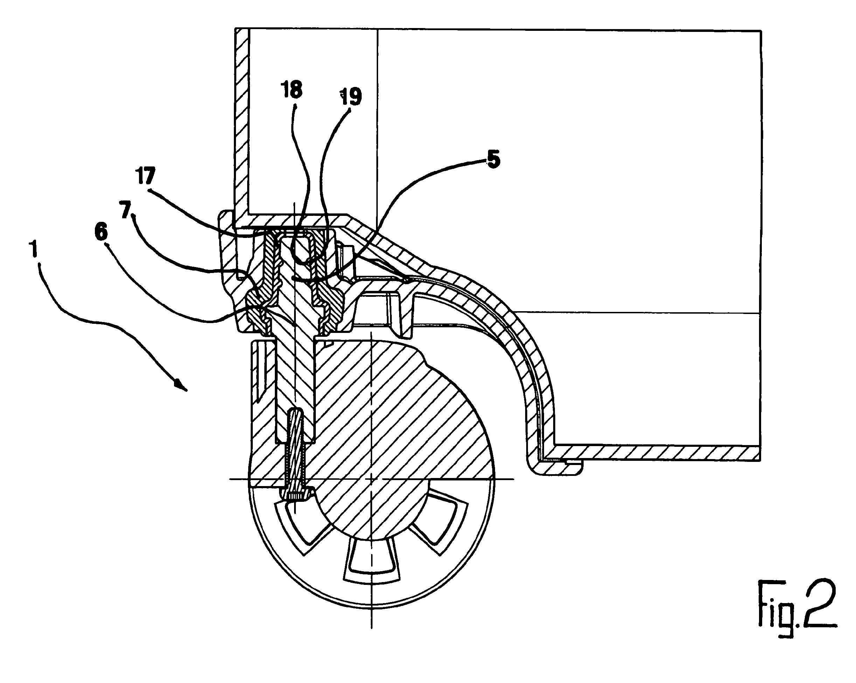

Bei einer in Figur 2 gezeigten erfindungsgemäßen Ausführungsform der Lenkrolle 1 ist zwischen dem kofferseitigen Endabschnitt 5 der Lenkrolle 6 und dem gummielastischen Dämpfungselement 7 ein buchsenförmiges Haftungselement 17 vorgesehen. Dieses buchsenförmige Haftungselement 17 besteht aus einem Kunststoff, der im Vergleich zum Werkstoff bzw. Kunststoff des gummielastischen Dämpfungselements 7 vergleichsweise hart ist. Durch das buchsenförmige Haftungselement 17 kann eine verbesserte Haftung bzw. Verankerung zwischen dem gummielastischen Dämpfungselement 7 einerseits und dem kofferseitigen Endabschnitt 5 der Lenkachse 6 andererseits erreicht werden. Das buchsenförmige Haftungselement 17 ist an seiner dem kofferseitigen Endabschnitt 5 der Lenkachse 6 zugeordneten Seite so ausgestaltet, dass eine optimale Verankerung des buchsenförmigen Haftungselements 17 am kofferseitigen Endabschnitt 5 der Lenkachse 6 erreicht wird. Hierzu sind am buchsenförmigen Haftungselement 17 Vorsprungelemente in Form von Ringvorsprüngen 19 vorgesehen, die in auf dem Endabschnitt 5 der Lenkwelle 6 ausgebildete Ringausnehmungen 18 vorstehen und so eine formschlüssige Verbindung zwischen dem kofferseitigen Endabschnitt 5 der Lenkachse 6 einerseits und dem buchsenförmigen Haftungselement 17 andererseits realisieren. Auf seiner dem gummielastischen Dämpfungselement 7 zugeordneten Seite ist das buchsenförmige Haftungselement 17 so ausgestaltet, dass eine ideale Anhaftung des buchsenförmigen Haftungselements 17 an das gummielastische Dämpfungselement 7 realisierbar ist.

## Patentansprüche

1. Lenkrolle für Koffer, mit zumindest einem Laufrad (8), das um eine Drehachse (14) drehbar gelagert ist, und einer Lenkachse (6), die etwa senkrecht zur Drehachse (14) des zumindest einen Laufrads (8) angeordnet und um die herum das zumindest eine Laufrad (8) lenkbar ist, wobei die Lenkrolle (1) ein elastisches Dämpfungselement (7) aufweist, das zwischen dem Laufrad (8) der Lenkrolle (1) einerseits und einem kofferseitigen Befestigungsteil (3) der Lenkrolle (1) andererseits am kofferseitigen Endabschnitt (5) der Lenkachse (6) zwischen dieser und dem als Lenkachsenträger (3) ausgebildeten kofferseitigen Befestigungsteil (3) der Lenkrolle (1) angeordnet ist, **dadurch gekennzeichnet, daß** zwischen dem elastischen Dämpfungselement (7) und dem Endabschnitt (5) der Lenkachse (6) ein buchsenförmiges Haftungselement (17) angeordnet ist, welches einerseits fest am elastischen Dämpfungselement (7) anhaftet und andererseits fest am Endabschnitt (5) der Lenkachse (6) verankert ist.

2. Lenkrolle nach Anspruch 1, bei der die Drehachse (14) des Laufrads (8) und die Lenkachse (6) der Laufrolle (1) um einen Abstand (A) versetzt zueinander angeordnet sind.

3. Lenkrolle nach Anspruch 1 oder 2, bei der das elastische Dämpfungselement (7) als gummielastisches Dämpfungselement (7) ausgebildet ist.

4. Lenkrolle nach einem der Ansprüche 1 bis 3, bei der ein weiteres elastisches Dämpfungselement am laufrollenseitigen Endabschnitt (9) der Lenkachse (6) zwischen dieser und einem das Laufrad (8) drehbar um dessen Drehachse (14) lagernden Radträger (11) angeordnet ist.

5. Lenkrolle nach einem der Ansprüche 1 bis 4, bei der das elastische Dämpfungselement (7) den kofferseitigen (5) bzw. den laufradseitigen Endabschnitt (9) der Lenkachse (6) zumindest teilweise, vorzugsweise vollständig bzw. nahezu vollständig, umgibt.

6. Lenkrolle nach einem der Ansprüche 1 bis 5, bei der die Lenkachse (6) drehfest am Lenkachsenträger (3) bzw. drehfest am Radträger (11) verankert ist.

7. Lenkrolle nach einem der Ansprüche 4 bis 6, bei der am Lenkachsenträger (3) ein zum Laufrad (8) bzw. zum Radträger (11) vorstehendes Begrenzungselement (15) ausgebildet ist, mittels dem eine Bewegung des Laufrads (8) bzw. des Radträgers (11) in Richtung zum Lenkachsenträger (3) so begrenzbar ist, dass eine Berührung zwischen dem Laufrad (8) und dem Lenkachsenträger (3) ausgeschlossen ist.

8. Lenkrolle nach Anspruch 7, bei der dem lenkachsenträgerseitigen Begrenzungselement (15) eine radträgerseitige Anschlagnase (16) zugeordnet ist, gegen die das Begrenzungselement (15) anschlägt.

9. Lenkrolle nach einem der Ansprüche 1 bis 8, deren buchsenförmiges Haftungselement (17) aus einem im Vergleich zum Dämpfungselement (7) harten Kunststoff ausgebildet ist.

10. Lenkrolle nach einem der Ansprüche 1 bis 9, bei der auf dem Endabschnitt (5, 9) der Lenkachse (6) zumindest eine, vorzugsweise zwei umlaufende Ringausnehmungen (18) ausgebildet sind, in die zugeordnete Ringvorsprünge (19) des Haftungselements (17) vorstehen.

## Claims

1. A steering caster for suitcases, having at least one running wheel (8), which is mounted such that it can rotate about a rotation axle (14), and a steering axle (6), which is arranged approximately perpendicularly to the rotation axle (14) of the at least one running wheel (8) and about which the at least one running wheel (8) can be steered, the steering caster (1) having an elastic damping element (7), which is arranged between the running wheel (8) of the steering caster (1) on one side and a suitcase-side fastening part (3) of the steering caster (1) on the other side on the suitcase-side end section (5) of the steering axle (6) between the latter and the suitcase-side fastening part (3), which is formed as a steering axle carrier (3), of the steering caster (1), **characterised in that** a sleeve-shaped adhesion element (17) is arranged between the elastic damping element (7) and the end section (5) of the steering axle (6), said adhesion element adhering fixedly to the elastic damping element (7) on one side and being anchored fixedly to the end section (5) of the steering axle (6) on the other side.

2. The steering caster according to claim 1, in which the rotation axle (14) of the running wheel (8) and the steering axle (6) of the steering caster (1) are arranged offset from each other by a distance (A).

3. The steering caster according to claim 1 or 2, in which the elastic damping element (7) is formed as a rubber-elastic damping element (7).

4. The steering caster according to any one of claims 1 to 3, in which a further elastic damping element is arranged on the running-wheel-side end section (9) of the steering axle (6) between the latter and a wheel carrier (11) that bears the running wheel (8) such that it can rotate about the rotation axle thereof (14).

5. The steering caster according to any one of claims 1 to 4, in which the elastic damping element (7) at least partially, preferably completely or virtually completely, surrounds the suitcase-side (5) or the running-wheel-side end section (9) of the steering axle (6).

6. The steering caster according to any one of claims 1 to 5, in which the steering axle (6) is anchored in a rotationally fixed manner to the wheel axle carrier (3) or in a rotationally fixed manner to the wheel carrier (11).

7. The steering caster according to any one of claims 4 to 6, in which a limiting element (15), which projects towards the running wheel (8) or wheel carrier (11), is formed on the steering axle carrier (3), by means of which limiting element a movement of the running wheel (8) or of the wheel carrier (11) can be limited in the direction towards the steering axle carrier (3) in such a manner that contact between the running wheel (8) and the steering axle carrier (3) is prevented.

8. The steering caster according to claim 7, in which the steering-axle-carrier-side limiting element (15) is assigned a wheel-carrier-side stop nose (16), against which the limiting element (15) strikes.

9. The steering caster according to any one of claims 1 to 8, the sleeve-shaped adhesion element (17) of which is formed from a plastic that is hard compared to the damping element (7).

10. The steering caster according to any one of claims 1 to 9, in which at least one, preferably two circumferential annular recesses (18) are formed on the end section (5, 9) of the steering axle (6), into which recesses associated annular projections (19) of the adhesion element (17) project.

## Revendications

1. Roulette-guide pour valise avec au moins une roue de roulement (8) qui est montée tournante autour d'un axe de rotation (14) et un axe orientable (6) qui est disposé sensiblement perpendiculairement à l'axe de rotation (14) de la au moins une roue de roulement (8) et autour duquel au moins une roue de roulement (8) est orientable, la roulette-guide (1) comportant un élément d'amortissement élastique (7) qui est disposé entre la roue de roulement (8) de la roulette-guide (1) d'une part et une pièce de fixation (3) côté valise de la roulette-guide (1) d'autre part sur la section d'extrémité (5) côté valise de l'axe orientable (6) entre celui-ci et la pièce de fixation (3) de la roulette-guide (1) côté valise constituée comme d'axe orientable (3), **caractérisé en ce qu'**entre l'élément d'amortissement élastique (7) et la section d'extrémité (5) de l'axe orientable (6) est disposé un élément d'attache (17) en forme de douille qui adhère d'une part fixement à l'élément d'amortissement élastique (7) et est d'autre part fixement ancré à la section d'extrémité (5) de l'axe orientable (6).

2. Roulette-guide selon la revendication 1 pour lequel l'axe de rotation (14) de la roue de roulement (8) et l'axe orientable (6) de la roulette-guide (1) sont disposés décalés d'un espacement (A) l'un par rapport à l'autre.

3. Roulette-guide selon la revendication 1 ou 2 pour lequel l'élément d'amortissement élastique (7) est constitué comme un élément d'amortissement élastique (7) de caoutchouc.

4. Roulette-guide selon une quelconque des revendications 1 à 3 pour lequel un autre élément d'amortissement élastique est disposé sur la section d'extrémité (9) du côté roulette de l'axe orientable (6) entre celui-ci et un support de roue (11) logeant la roue de roulement (8) pouvant tourner autour de son axe de rotation (14).

5. Roulette-guide selon une quelconque des revendications 1 à 4 pour lequel l'élément d'amortissement (7) élastique entoure la section d'extrémité (9) de l'axe orientable (6) du côté valise (5) ou du côté de la roue de roulement au moins partiellement, de préférence complètement ou presque complètement.

6. Roulette-guide selon une quelconque des revendications 1 à 5 pour lequel l'axe orientable (6) est fermement ancré au support d'axe orientable (3) ou fermement au support de roue (11).

7. Roulette-guide selon une quelconque des revendications 4 à 6 pour lequel un élément de limitation (15) avançant vers la roue de roulement (8) ou le support de roue (11) est constitué sur le support d'axe orientable (3) au moyen duquel un mouvement de la roue de roulement (8) ou du support de roue (11) peut être limité dans la direction du support d'axe orientable (3) de telle sorte qu'un contact est exclu entre la roue de roulement (8) et le support d'axe orientable (3).

8. Roulette-guide selon la revendication 7 pour lequel une came de butée (16) côté support de roue est attribuée à l'élément de limitation (15) côté support d'axe orientable contre laquelle bute l'élément de limitation (15).

9. Roulette-guide selon une quelconque des revendications 1 à 8 dont l'élément d'attache (17) en forme de douille est constitué d'une matière plastique dure en comparaison de l'élément d'amortissement (7).

10. Roulette-guide selon une quelconque des revendications 1 à 9 pour lequel au moins un, de préférence deux évidements annulaires (18) circulaires sont constitués sur la section d'extrémité (5, 9) de l'axe orientable (6) dans lesquels avancent les parties en saillie annulaires (19) attribuées de l'élément d'attache (17).
